Europäisches Patentamt

European Patent Office

Office européen des brevets

(11) Veröffentlichungsnummer : **0 117 495**
**B1**

# (12) EUROPÄISCHE PATENTSCHRIFT

(45) Veröffentlichungstag der Patentschrift :
30.09.87

(21) Anmeldenummer : 84101655.3

(22) Anmeldetag : 17.02.84

(51) Int. Cl.⁴ : **C 08 G 69/16**

(54) **Verfahren zum kontinuierlichen Herstellen von Polylactamen.**

(30) Priorität : 26.02.83 DE 3306906

(43) Veröffentlichungstag der Anmeldung :
05.09.84 Patentblatt 84/36

(45) Bekanntmachung des Hinweises auf die Patenterteilung : 30.09.87 Patentblatt 87/40

(84) Benannte Vertragsstaaten :
BE CH DE IT LI NL

(56) Entgegenhaltungen :
DE-A- 1 495 011
DE-A- 2 412 742
DE-A- 2 443 566

(73) Patentinhaber : **BASF Aktiengesellschaft**
**Carl-Bosch-Strasse 38**
**D-6700 Ludwigshafen (DE)**

(72) Erfinder : **Pipper, Gunter**
**Schlangenthaler Weg 10**
**D-6702 Bad Duerkheim (DE)**
Erfinder : **Theysohn, Rainer, Dr.**
**Am Bruch 38**
**D-6710 Frankenthal (DE)**
Erfinder : **Zahradnik, Franz, Dr.**
**Schwedlerstrasse 120**
**D-6700 Ludwigshafen (DE)**

## Beschreibung

Es sind bereits eine größere Zahl von Verfahren zur Herstellung von Polyamiden, z. B. Polycaprolactam bekannt. Die Mehrzahl dieser Verfahren arbeitet bei Normaldruck nach dem sogenannten VK-Rohrverfahren. Bei Normaldruck werden hierbei im allgemeinen Polymerisationszeiten von 20 bis 40 Stunden unter polyamidbildenden Temperaturen von 250 bis 270 °C benötigt. Solche Verfahren haben den Nachteil, daß die Ausgangsstoffe und die Polymeren einer langen thermischen Belastung ausgesetzt werden, was zu Verfärbungen und zur erhöhten Gelbildung führt. In der DD-PS 54 809 ist bereits eine dreistufige Vorrichtung zum Polymerisieren von Caprolactam beschrieben. Hierbei soll in einem absteigendem Rohr vorpolymerisiert werden, dann in einem Trockner Wasserdampf entfernt werden und das Präpolymere in einem nachgeschalteten senkrechten Rohr mit wandgängigen Spiralrührer auspolymerisiert werden. Aus der DE-OS 2 443 566 ist auch bereits ein Verfahren bekannt, bei dem man in einer ersten Stufe unter Verhinderung der Ausbildung einer Dampfphase Wasser enthaltendes Caprolactam vorpolymerisiert, bis ein Mindestumsatz von 80 % erreicht ist, das Gemisch auf niedrigeren Druck entspannt unmittelbar anschließend in einer dritten Reaktionszone unter Bildung von Wasserdampf erhitzt und diesen in einer vierten Reaktionszone abtrennt. Diese Arbeitsweisen bedürfen immer noch eines erheblichen Zeitaufwandes, wobei das Reaktionsgemisch auf längere Zeit auf polyamidbildenden Temperaturen gehalten werden muß. Das Verfahren zur Herstellung von Polylactamen ist deshalb noch verbesserungsbedürftig.

In der DE-A-1 495 011 wird ein mehrstufiges Verfahren zur Polymerisation von Caprolactam beschrieben, bei dem in einer ersten Polymerisationsstufe bei einer Temperatur von 180 bis 300 °C unter einem Wasserdampfdruck von 1,7 bis 10 Atmosphären und einer Verweilzeit von 1/2 bis 10 Stunden Caprolactam mit einem Wassergehalt von 0,1 bis 10 Gew.-% unter Rühren und Vermeidung von Durchmischung in ein Präpolymeres mit einem Extraktgehalt von 12 bis 30 % überführt und dann in weiteren Stufen auspolymerisiert wird. Das Verfahren hat den Nachteil, daß das mitverwendete Wasser relativ langsam verdampft und ein hoher Umsetzungsgrad in kurzer Zeit nicht erzielbar ist.

Es war deshalb die technische Aufgabe gestellt, ein kontinuierliches Verfahren zur Herstellung von Polylactamen zur Verfügung zu stellen, das in kurzer Zeit verläuft, wobei das Reaktionsgemisch nur eine möglichst kurze Zeit als Schmelze vorliegt und möglichst ein niedriger Gelgehalt erzielt wird. Ferner soll der Gehalt an schwer extrahierbaren Oligomeren möglichst niedrig gehalten werden.

Diese Aufgabe wird gelöst in einem kontinuierlichen Verfahren zur Herstellung von Polylactamen, bei dem man in einer Vorpolymerisationszone 1 bis 25 Gew.-% Wasser enthaltende Lactame unter erhöhtem Druck auf eine Temperatur von 220 bis 280 °C zur Bildung eines Präpolymeren erhitzt, Präpolymeres und Dampf kontinuierlich trennt, das Präpolymere in eine Polymerisationszone leitet und unter erhöhtem Druck bei einer Temperatur von 240 bis 290 °C weiter polymerisiert, dadurch gekennzeichnet, daß man die Wasser enthaltenden Lactame in der Vorpolymerisationszone, die als Röhrenverdampfer ausgebildet ist, unter einem Druck von 1 bis 10 bar unter gleichzeitiger Verdampfung des Wassers innerhalb einer Verweilzeit von 1 bis 10 min erhitzt mit der Maßgabe, daß bei Austritt aus der Vorpolymerisationszone der Umsetzungsgrad mindestens 85 % beträgt.

Das neue Verfahren hat den Vorteil, daß es in kürzerer Zeit verläuft und das Polymere nur relativ kurze Zeit im schmelzflüssigen Zustand gehalten werden muß. Ferner hat das neue Verfahren den Vorteil, daß die Gefahr der Gelbildung vermindert wird und zudem der Gehalt an schwer extrahierbaren Oligomeren vermindert wird.

Erfindungsgemäß geht man von 1 bis 25 Gew.-% Wasser enthaltenden Lactamen aus. Geeignete Lactame sind solche mit 7 bis 12 Ringgliedern, z. B. Caprolactam, Capryllactam ; oder deren Gemische. Besondere technische Bedeutung hat Caprolactam erlangt. Vorteilhaft beträgt der Wassergehalt 1 bis 20 Gew.-%. Die Ausgangslösung kann übliche Zusätze wie Mattierungsmittel, z. B. Titandioxid oder Stabilisatoren enthalten. Darüber hinaus können weitere polyamidbildende Verbindungen wie Salze aus Dicarbonsäuren und Diaminen mitverwendet werden.

Die Wasser enthaltenden Lactame leitet man vorteilhaft mit einer Temperatur von 50 bis 100 °C kontinuierlich in eine Vorpolymerisationszone die als Röhrenverdampfer ausgebildet ist. Dort werden die Lactame unter gleichzeitiger Verdampfung von Wasser und Bildung eines Präpolymeren unter einem Druck von 1 bis 10 bar auf eine Temperatur von 220 bis 280 °C erhitzt. Vorteilhaft wendet man einen Druck von 2 bis 6 bar an und erhitzt auf eine Temperatur von 240 bis 280 °C.

In der Vorpolymerisationszone hält man eine Verweilzeit von 1 bis 10 min ein. Die Vorpolymerisationszone ist vorteilhaft als Röhrenbündel ausgebildet. Besonders bewährt haben sich Röhrenbündel, deren Röhren periodisch wiederkehrenden Querschnittsveränderungen, die rohrförmig und spaltförmig ausgebildet sind aufweisen. Bei dieser bevorzugten Arbeitsweise haben sich Verweilzeiten von 60 bis 180 s besonders bewährt. Nach einer anderen vorteilhaften Arbeitsweise wird das Gemisch aus Präpolymeren und Dampf vor der Trennung der Phasen unmittelbar nach der Vorpolymerisationszone durch eine röhrenförmige Stoffaustauschzone, die mit Einbauten versehen ist, geleitet. Hierbei hält man die in der Vorpolymerisationszone angewandten Temperaturen und Druckbedingungen ein. Die Einbauten, z. B. Füllkörper wie Raschigringe, Metallringe oder insbesondere Füllkörper aus Drahtnetz haben sich besonders als geeignet erwiesen. In der Regel erhält man in der Stoffaustauschzone eine Verweilzeit von 1 bis 10 min ein.

Das aus der Vorpolymerisationszone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die frei werdenden Brüden bestehen im wesentlichen aus Wasserdampf und geringen Mengen an Lactamen, die beim Verdampfen des Wassers freigesetzt wurden. Vorteilhaft werden diese Brüden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Vorpolymerisationszone betrieben. Das in den Brüden erhaltene Lactam wird hierbei abgetrennt und vorteilhaft wieder in die Vorpolymerisationszone zurückgeführt.

Das erhaltene Präpolymere, das im wesentlichen aus niedermolekularen Polylactamen besteht und in der Regel eine relative Viskosität von 1,2 bis 1,5 hat, wird in eine Polymerisationszone geleitet. In der Polymerisationszone wird die anfallende Schmelze bei einer Temperatur von 240 bis 290 °C und unter einem Druck von 1 bis 10 bar, insbesondere 2 bis 6 bar weiter polymerisiert. Vorteilhaft hält man in der Polymerisationszone eine Verweilzeit von 5 bis 20 min ein. Das so erhaltene Polycaprolactam, das in der Regel eine relative Viskosität von 1,6 bis 2,2 hat, wird kontinuierlich aus der Polymerisationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase, zweckmäßig nach Entfernen der Monomeren und Oligomeren durch Extraktion mit Wasser bei erhöhter Temperatur oder in der Schmelze unter vermindertem Druck, z. B. zusammen mit dem Restwasser in dem oben erwähnten Entgasungsextruder, mittels überhitztem Wasserdampf und/oder Stickstoff bei einer Temperatur unterhalb des Schmelzpunktes, z. B. von 140 bis 180 °C bis zur gewünschten Viskosität polymerisiert. Vorteilhaft verwendet man hierfür den am Kopf der Kolonne anfallenden Wasserdampf.

Nach einer anderen bevorzugten Arbeitsweise leitet man das aus der Polymerisationszone erhaltene Polyamid schmelzflüssig durch eine Entgasungszone, in der unter vermindertem Druck, z. B. in einem Entgasungsextruder, Wasser, Monomere und Oligomere entfernt werden und anschließend durch eine weitere Polymerisationszone, in der das Polyamid in schmelzflüssigem Zustand bis zur gewünschten Viskosität polymerisiert wird. Das nach dem Verfahren hergestellte Polycaprolactam eignet sich zur Herstellung von Formkörpern, Folien oder Fäden und Fasern.

Das Verfahren nach der Erfindung sei an folgendem Beispiel veranschaulicht :

Beispiel

Eine wäßrige Caprolactamlösung mit 80 Gew.-% Caprolactam wird aus einem beheizten Vorratsbehälter bei 80 °C mit einer Geschwindigkeit entsprechend einer Polyamidmenge von 4,5 kg/h mittels einer Dosierpumpe in einen vertikal angeordneten Röhrenverdampfer befördert. Der Verdampfer ist mit einem flüssigen Wärmeträger, der eine Temperatur von 285 °C hat, bei kräftiger Umwälzung beheizt. Der Verdampfer hat eine Länge von 3 m, einen Inhalt von 180 ml und eine wärmeübertragende Oberfläche von 1300 cm$^2$. Die Verweilzeit im Verdampfer beträgt 80 bis 90 s. Das aus der Vorpolymerisationszone austretende Gemisch aus Präpolymeren und Wasser hat eine Temperatur von 280 °C und wird in einem Abscheider in Wasserdampf und Schmelze getrennt. Die Schmelze verweilt im Abscheider noch 20 Minuten und wird dann mittels einer Austragsschnecke mit Ausdampfzone in Form von Strängen ausgetragen, in einem Wasserbad verfestigt und anschließend granuliert. Der Abscheider und die Vorpolymerisationszone werden mittels einer Druckhalteeinrichtung, die nach der Kolonne angeordnet ist unter einem Druck von 10 bar gehalten. Der im Abscheider abgetrennte Wasserdampf wird in eine Füllkörperkolonne mit ca. 10 theoretischen Böden geleitet, am Kopf ca. l 1/h Brüdenkondensat zur Erzeugung von Rücklauf aufgegeben. Am Kolonnenkopf stellt sich eine Temperatur von 178 °C ein. Der aus dem Entspannungsventil austretende Wasserdampf hat einen Anteil an Caprolactam kleiner 0,02 Gew.-%. Als Kolonnensumpf erhält man eine Lösung von 4,7 Gew.-% Caprolactam, bezogen auf erzeugtes Polycaprolactam. Diese Lösung wird mit einer Dosierpumpe wieder vor der Vorpolymerisationszone in die Ausgangslösung zurückgeführt.

Das aus der Polymerisationszone ausgetragene Polymere hat eine relative Viskosität von 1,69 bis 1,72, gemessen in 98 Gew.-% Schwefelsäure bei 20 °C und einen methanollöslichen Anteil von 10, 2 bis 11,1 Gew.-%. Die Endgruppensumme beträgt 230 bis 240 val/t bei äquivalenten Endgruppen. Im Austragsextruder wird die Schmelze auf Normaldruck entspannt und bei einer Verweilzeit kleiner 1 min praktisch nicht weiter polymerisiert. Das erhaltene Granulat wird nach Extraktion mit heißem Wasser in fester Phase mit Stickstoff bei 180 °C und einer Verweilzeit von 35 Stunden auf die Endviskosität von 2,6 polymerisiert.

**Patentansprüche**

1. Verfahren zur kontinuierlichen Herstellung von Polylactamen, bei dem man in einer Vorpolymerisationszone 1 bis 25 Gew.-% Wasser enthaltende Lactame unter erhöhtem Druck bei einer Temperatur von 220 bis 280 °C unter Bildung eines Präpolymeren erhitzt, Präpolymeres und Dampf kontinuierlich trennt, das Präpolymere in eine Polymerisationszone leitet und unter erhöhtem Druck bei einer Temperatur von 240 bis 290 °C weiter polymerisiert, dadurch gekennzeichnet, daß man die Wasser enthaltenden Lactame in der Vorpolymerisationszone, die als Röhrenverdampfer ausgebildet ist, unter einem Druck von 1 bis 10 bar unter gleichzeitiger Verdampfung des Wassers innerhalb einer Verweilzeit von 1 bis 10 min erhitzt, mit der Maßgabe, daß bei Austritt aus der Vorpolymerisationszone der Umsetzungsgrad mindestens 85 % beträgt.

2. Verfahren nach Anspruch 1, dadurch gekennzeichnet, daß der Umsetzungsgrad bei Austritt aus der Vorpolymerisationszone mindestens 88 % beträgt.

3. Verfahren nach den Ansprüchen 1 und 2, dadurch gekennzeichnet, daß die Vorpolymerisationszone alternierend rohrförmig und spaltförmig ausgeführt ist und die Verweilzeit 60 bis 180 s beträgt.

4. Verfahren nach den Ansprüchen 1 bis 3, dadurch gekennzeichnet, daß man das Polylactam schmelzflüssig aus der Polymerisationszone durch eine Austragszone unter Entfernen von Wasser leitet, granuliert, mit Wasser extrahiert und in fester Phase bis zur gewünschten Viskosität polymerisiert.

5. Verfahren nach den Ansprüchen 1 bis 3, dadurch gekennzeichnet, daß man das Polylactam schmelzflüssig aus der Polymerisationszone durch eine Austragszone leitet, in der restliches Wasser, Monomeren und Oligomere unter vermindertem Druck entfernt werden, granuliert und in fester Phase bis zur gewünschten Viskosität polymerisiert.

6. Verfahren nach den Ansprüchen 4 und 5, dadurch gekennzeichnet, daß man den im Abscheider anfallenden Wasserdampf nach Abtrennen von Lactamen für die Polymerisation in fester Phase verwendet.

7. Verfahren nach Anspruch 5, dadurch gekennzeichnet, daß man die Endpolymerisation bis zur gewünschten Viskosität in schmelzflüssigem Zustand durchführt.

## Claims

1. A process for the continuous preparation of a polylactam, in which, in a prepolymerization zone, a lactam containing from 1 to 25 % by weight of water is heated at from 220 to 280 °C under superatmospheric pressure to form a prepolymer, the prepolymer and vapor are separated continuously, and the former is passed into a polymerization zone and is polymerized further under superatmospheric pressure and at from 240 to 290 °C, characterized in that the water-containing lactam is heated in the prepolymerization zone, which is in the form of a tubular vaporizer, for from 1 to 10 minutes under a pressure of from 1 to 10 bar with simultaneous vaporization of the water, with the proviso that, when the lactam emerges from the prepolymerization zone, the degree of conversion is not less than 85 %.

2. A process as claimed in claim 1, characterized in that, when the lactam emerges from the prepolymerization zone, the degree of conversion is not less than 88 %.

3. A process as claimed in claims 1 and 2, characterized in that the prepolymerization zone is alternately tubular and slot-shaped, and the residence time is from 60 to 180 seconds.

4. A process as claimed in claims 1 to 3, characterized in that the polylactam, in the form of a melt, is passed from the polymerization zone through a discharge zone with removal of water, and is granulated, extracted with water, and polymerized in the solid phase to the desired viscosity.

5. A process as claimed in claims 1 to 3, characterized in that the polylactam, in the form of a melt, is passed from the polymerization zone through a discharge zone in which residual water, monomers and oligomers are removed under reduced pressure, and is granulated, and polymerized in the solid phase to the desired viscosity.

6. A process as claimed in claims 4 and 5, characterized in that the steam obtained in the separator is used, after lactams have been separated off, for the polymerization to the solid phase.

7. A process as claimed in claim 5, characterized in that the final polymerization to the desired viscosity is carried out in the molten state.

## Revendications

1. Procédé pour la préparation continue de polylactames, conformément auquel on chauffe, dans une zone de prépolymérisation, 1 à 25 % en poids de lactames contenant de l'eau, à une température qui varie de 220 à 280 °C, sous pression élevée, avec formation d'un prépolymère, on sépare en continu du prépolymère et de la vapeur d'eau, on introduit le prépolymère dans une zone de polymérisation et on le polymérise à une température qui fluctue de 240 à 290 °C et sous pression élevée, caractérisé en ce que l'on chauffe les lactames contenant de l'eau présents dans la zone de prépolymérisation, réalisée sous forme d'évaporateur tubulaire, sous une pression de 1 à 10 bars et avec évaporation simultanée de l'eau, pendant une durée de séjour de 1 à 10 minutes, avec la particularité que le degré de conversion atteint au moins 85 % à la sortie de la zone de prépolymérisation.

2. Procédé suivant la revendication 1, caractérisé en ce que le degré de conversion atteint au moins 88 % à la sortie de la zone de prépolymérisation.

3. Procédé suivant les revendications 1 et 2, caractérisé en ce que la zone de prépolymérisation est réalisée en alternance sous forme de tubes et sous forme de fentes et la durée de séjour varie de 6 à 180 s.

4. Procédé suivant les revendications 1 à 3, caractérisé en ce que l'on conduit le polylactame à l'état fondu à partir de la zone de polymérisation à travers une zone de sortie avec élimination d'eau, on le granule, on l'extrait à l'eau et on le polymérise en phase solide jusqu'à la viscosité souhaitée.

5. Procédé suivant les revendications 1 à 3, caractérisé en ce que l'on conduit le polylactame à l'état liquide fondu à partir de la zone de polymérisation à travers une zone de sortie dans laquelle l'eau résiduelle, les monomères et les oligomères sont éliminés sous pression réduite, on le granule et on le polymérise en phase solide jusqu'à la viscosité souhaitée.

6. Procédé suivant les revendications 4 et 5, caractérisé en ce que l'on utilise la vapeur d'eau que l'on rencontre dans le séparateur après la séparation des lactames en vue de procéder à la polymérisation en phase solide.

7. Procédé suivant la revendication 5, caractérisé en ce que l'on réalise la polymérisation finale jusqu'à la viscosité souhaitée à l'état liquide fondu.